# EUROPEAN PATENT APPLICATION

(11) **EP 4 564 788 A1**
(43) Date of publication of application: **04.06.2025**
(21) Application number: 23846016.6
(22) Date of filing: 05.06.2023
(51) Int. Cl.: H04L 69/08, H04L 12/66, H04L 61/2521

(54) **COMMUNICATION PROCESSING DEVICE AND COMMUNICATION METHOD**

(30) Priority: 29.07.2022 JP 2022122259
(71) Applicant: Kabushiki Kaisha Toshiba, Tokyo 105-0023 (JP); TOSHIBA INFRASTRUCTURE SYSTEMS & SOLUTIONS CORPORATION, Saiwai-ku Kawasaki-shi Kanagawa 212-0013 (JP)
(72) Inventor: WADA Hiroho, Tokyo 105-0023 (JP); OHNISHI Naoya, Kawasaki-shi, Kanagawa 212-0013 (JP); NAKAMURA Kohta, Kawasaki-shi, Kanagawa 212-0013 (JP); AMAKI Satoru, Kawasaki-shi, Kanagawa 212-0013 (JP); NAKATANI Hiroshi, Kawasaki-shi, Kanagawa 212-0013 (JP); TASHIRO Taichi, Kawasaki-shi, Kanagawa 212-0013 (JP)
(74) Representative: AWA Sweden AB
(86) International application number: PCT/JP2023/020784
(87) International publication number: WO 2024/024280

(57) **Abstract**

[Problem] To realize communication between communication devices belonging to networks with different address architectures.

[Solution to Problem] The communication processing device of the present embodiment comprises: a first communicator to receive a message of a first communication protocol from a first communication device in a first network of a first address architecture; a communication protocol processor configured to, when a destination address of the received message of the first communication protocol matches a first address of the first communicator, generate a message of a second communication protocol having a payload including address information indicative of an address of a second communication device in a second network and including the message of the first communication protocol, the message of the second communication protocol requesting that the message of the first communication protocol be transferred to the second communication device; and a second communicator configured to transmit the message of the second communication protocol to a gateway device which can communicate with the second communication device in the second network.

## Description

### [Technical Field]

The embodiments described herein relate to a communication processing device and a communication method.

### [Background Art]

Industrial controllers are used to automatically control industrial processes, machines, manufacturing equipment, etc. in factories. Terminals equipped with software for controlling industrial controllers, such as for setting and directing the operation of the industrial controller, are located on the same local network as the industrial controller. Therefore, to control the industrial controller, the task operator must move to the location where the terminal is installed each time, which is not convenient.

Recently, there is a demand to increase convenience by placing the software on a server in the cloud and enabling the industrial controller to be controlled remotely from any location via the server. However, when the software is placed on a server in the cloud, the cloud is a different network from the industrial controller, and the address architecture and communication protocols are different, so the server and the industrial controller cannot communicate with each other as they are. To enable communication between the server and the industrial controller, new functions must be added to both a software of the server and the industrial controller.

### [Citation List]

### [Patent Literature]

[Patent Literature 1] Patent Publication No. 11-112577

### [Summary of Invention]

### [Technical Problem]

Embodiments of the invention provides a communication processing device and a communication method that realize communication between communication devices belonging to networks with different address architectures from each other.

### [Solution to Problem]

According to one embodiment, a communication processing device comprises a first communicator configured to receive a message of a first communication protocol from a first communication device in a first network of a first address architecture; an address specifying unit configured to, in response to a destination address of the received message of the first communication protocol matching a first address of the first address architecture assigned to the first communicator, employ correspondence data mapping between the first address and an address of a second communication device in a second network of a second address architecture and specify the address of the second communication device corresponding to the first address; a communication protocol processor configured to generate a message of a second communication protocol having a payload, the payload including address information indicative of the address of the second communication device and including the message of the first communication protocol, the message of the second communication protocol requesting that the message of the first communication protocol be transferred to the second communication device; and a second communicator configured to transmit the message of the second communication protocol to a gateway device, the gateway device being able to which can communicate with the second communication device in the second network.

### [Brief Description of Drawings]

FIG. 1 is a block diagram of an example communication system for the first embodiment.
FIGS. 2A and 2B are examples of a conversion table.
FIG. 3 is an example of a sequence for the first embodiment.
FIG. 4 is another example of the sequence for the first embodiment.
FIG. 5 is a block diagram of the communication system for the second embodiment.
FIG. 6 is an example of a sequence for the second embodiment.
FIG. 7 is another example of the sequence for the second embodiment.
FIG. 8 is a block diagram of the communication system for Modification 1.
FIG. 9 is an example of a system configuration file.
FIG. 10 is a block diagram of an example communication system for Modification 3.
FIG. 11 is a block diagram of another example of a communication system for Modification 3.
FIG. 12 is a block diagram of an example communication system for Modification 4.
FIG. 13 is a block diagram of an example communication system for Modification 5.
FIG. 14 is a block diagram of an example communication system for Modification 6.
FIG. 15 is a block diagram of an example communication system for Modification 7.

### [Description of Embodiments]

The following is a description of the embodiment of the invention with reference to the drawings.

### (First Embodiment)

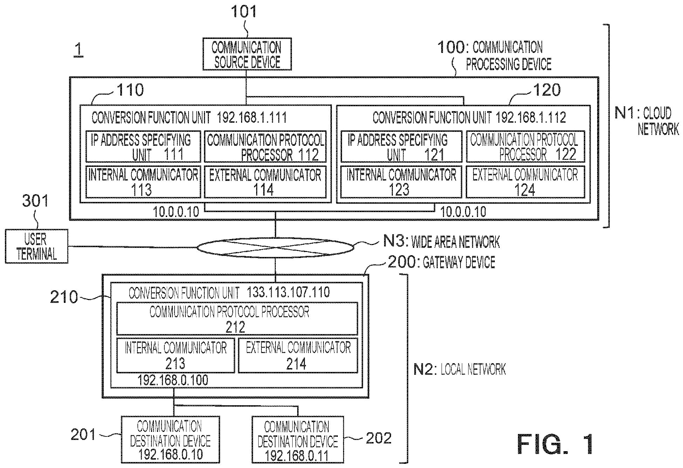

FIG. 1 is a block diagram of a communication system 1 of the first embodiment. In the following, FIG. 1 is first used to provide an overview of the communication system 1.

The communication system 1 in FIG. 1 is a system in which a cloud network N1, which is the first network on the cloud side, and a local network N2, which is the second network located in a facility such as a factory are connected via a wide area network N3 such as the Internet. The cloud network N1 is a network configured in the cloud.

A communication source device 101 is connected to the cloud network N1 as a server equipped with software for controlling operation settings or operation instructions for the industrial controller (communication destination device). The communication source device 101 is the first communication device located in the cloud network N1. Communication destination devices 201 and 202, which are industrial controllers, are connected to the local network N2 to automatically control industrial processes, machines, manufacturing equipment, etc. in a factory. The communication destination devices 201 and 202 are the second communication devices located on the local network N2.

The communication source device 101 transmits a message of the first communication protocol containing control data for the communication destination device 201 or 202 (hereinafter referred to as a control message of the first communication protocol) to control the communication destination device 201 or 202. Examples of control include operation settings or operation instructions for communication destination devices 201 and 202. The first communication protocol is, as an example, FTP, SOAP, XML, a vendor protocol, or a proprietary protocol. The first communication protocol is a protocol that is a higher layer than the transport layer communication protocol (e.g., UDP/IP or TCP/IP) as an example. In order to control a communication destination device 201 or 202 by transmission of a control message of the first communication protocol, it is necessary to deliver the control message of the first communication protocol to the communication destination device 201 or 202.

In the cloud network N1, IP addresses of a first address architecture (or a first address scheme) are used, and in the local network N2, IP addresses of a second address architecture (or a second address scheme), which is independent of the first address architecture, are used. Both the cloud network N1 and the local network N2 use local IP addresses. Normally, it is not possible for devices belonging to local networks with such different address architectures to communicate directly with each other via the wide area network N3.

In this embodiment, a mechanism for transferring a control message of the first communication protocol by a communication processing device 100 on the cloud network N1 side and a gateway device 200 on the local network N2 side is introduced. If the communication source device 101 transmits a control message of the first communication protocol to an address predetermined according to the communication destination device 201 or 202 to be controlled, the communication processing device 100 and the gateway device 20 forward this control message to the communication destination device 201 or 202 through the above mechanism. This enables the communication source device 101 to transmit the control message of the first communication protocol to the communication destination devices 201 and 202. This enables the transfer of the control message of the first communication protocol without adding a new function to the communication source device 101 and the communication destination devices 201 and 202.

The above is an overview of this system. In the following, the communication system 1 shown in FIG. 1 will be described in detail.

### [Overall configuration of cloud network N1.]

In FIG. 1, the communication processing device 100 is connected to the communication source device 101 in the cloud network N1. The communication processing device 100 is connected to the gateway device 200 in the wide area network N3. The cloud network N1 is a wired network or a wireless network. The wired or wireless network may be Ethernet (registered trademark) or WiFi (registered trademark). The cloud network N1 may be a network in a data center or other facility.

### [communication source device 101]

The communication source device 101 is a server or other communication device connected to the cloud network N1. The communication source device 101 may be remotely controllable from a user terminal 301 via wide area network N3. The communication source device 101 is equipped with software for controlling (e.g., operation settings, operation instructions) the communication destination devices 201 and 202. The communication source device 101 is a device that controls the communication destination devices 201, 202, or both of them. The communication source device 101 is assigned an IP address based on an address architecture in the cloud network N1 (first address architecture).

The communication source device 101 generates a message of a first communication protocol (control message) containing data for controlling the communication destination device 201 or 202 and generates a packet including the control message and including an IP header etc. added to the control message. The trigger for generating the control message can be anything, such as a timing indicated by the user or a timing when a predetermined event is established (e.g., when a specific time is reached). The communication source device 101 sets a destination IP address of the generated packet to an IP address of a conversion function unit that performs processing corresponding to the communication destination device (201 or 202) to be controlled, among the plurality of conversion function units (110 or 120) in the communication processing device. The communication source device 101 outputs the generated packet to the cloud network N1.

### [communication processing device 100]

The communication processing device 100 has a conversion function unit 110 and a conversion function unit 120. The communication processing device 100 is configured as a computer device equipped with a processor or CPU or other circuitry, a memory or hard disk or other storage device, and communication circuitry. The device may be configured by a single computer device or as a system comprising a plurality of interconnected computer devices. The functions of the communication processing device 100 may be realized by having a program executed by a CPU.

The conversion function unit 110 has an IP address specifying unit 111 (address specifying unit), a communication protocol processor 112, an internal communicator 113 (first communicator), and an external communicator 114 (second communicator). The internal communicator 113 communicates on the cloud network N1 side, and the external communicator 114 communicates on the wide area network N3 side. The conversion function unit 110 or the internal communicator 113 is assigned a local IP address of 192.168.1.111 for the cloud network N1. The conversion function unit 110 or the external communicator 114 is assigned 10.0.0.10 as the global IP address for the wide area network N3.

The conversion function unit 120 has an IP address specifying unit 121 (address specifying unit), a communication protocol processor 122, an internal communicator 123 (first communicator), and an external communicator 124 (second communicator). The internal communicator 123 communicates on the cloud network N1 side, and the external communicator 124 communicates on the wide area network N3 side. The conversion function unit 120 or the internal communicator 123 is assigned a local IP address of 192.168.1.112 for the cloud network N1. The conversion function unit 120 or external communicator 124 is assigned the same 10.0.0.10 as the address assigned to the conversion function unit 110 as the global IP address for the wide area network N3. As one configuration, the same global IP address may be assigned to a common communication interface shared by the conversion function unit 110 and the conversion function unit 120. As another configuration, the global IP addresses of the conversion function unit 110 and the conversion function unit 120 may be different.

The communication protocol processor 112 of the conversion function unit 110 and the communication protocol processor 122 of the function conversion unit 120 have a function of processing the second communication protocol. The second communication protocol is, as an example, HTTPS or HTTP. The second communication protocol is a different communication protocol from the first communication protocol and may be higher or lower than the first communication protocol in the stack structure of communication protocols. In this embodiment, it is mainly assumed that the second communication protocol is HTTPS; HTTPS is assumed to be a higher layer protocol than the first communication protocol. The conversion function units 110 and 120 may be equipped with HTTPS server functionality as the second communication protocol.

When the internal communicator 113 of the conversion function unit 110 receives a control message of the first communication protocol from the communication source device 101 with the local IP address of the conversion function unit 110 as the destination address, it stores the transmission source IP address of the control message in an internal memory of the conversion function unit 110. More precisely, when a packet containing a control message of the first communication protocol is received, the IP address contained in the source address field of the packet is stored in the internal memory of the conversion function unit 110. The conversion function unit 110 then performs message conversion processing (or simply called conversion processing) using the IP address specifying unit 111 and the communication protocol processor 112 described below. The conversion processing is to generate a message (transfer request message) of the second communication protocol that requests the transfer of a control message of the first communication protocol, and the message is generated by wrapping data including a control message of the first communication protocol etc. with the second communication protocol.

The IP address specifying unit 111 has correspondence data (conversion table) that maps the local IP address of the conversion function unit 110 to the local IP address of the communication destination device 201.

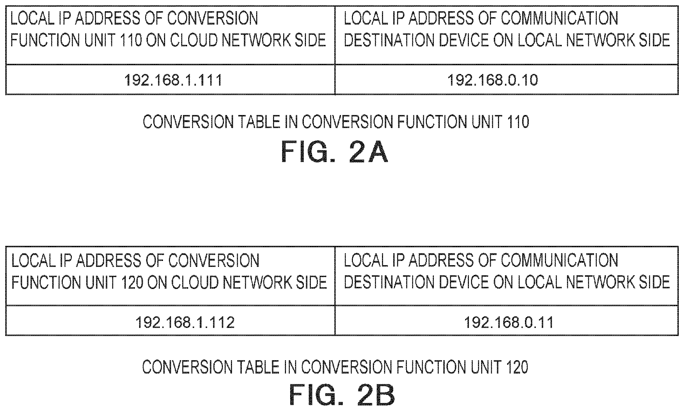

FIG. 2A shows an example of a conversion table held by the IP address specifying unit 111. When the destination IP address of a packet received from communication source device 101 matches the local IP address of the conversion function unit 110, the IP address specifying unit 111 specifies the local IP address of the corresponding communication destination device 201 from the conversion table.

The communication protocol processor 112 generates a payload which includes address information indicating the local IP address (192.168.0.10) of the communication destination device 201 identified by the IP address specifying unit 111 and which includes the control message of the first communication protocol that was included in the received packet. The communication processor 112 adds a header of the second communication protocol to the head side of the generated payload, thereby generating a transfer request message of the second communication protocol. Then, the communication protocol processor 112 further adds an IP header and other information to the transfer request message of the second communication protocol to obtain a packet.

The source IP address of the IP header added to the transfer request message of the second communication protocol is the global IP address (10.0.0.10) of the conversion function unit 110. The destination IP address is the global IP address of the gateway device 200, more specifically, the global IP address (133.113.107.110) of the conversion function unit 210 in the gateway device 200.

The external communicator 114 of the conversion function unit 110 outputs the generated packet to the wide area network N3. As a result, the external communicator 114 transmits the transfer request message of the second communication protocol to the gateway device 200 via the wide area network N3.

The conversion function unit 120 has the same function as the conversion function unit 110, except that the communication destination device for the conversion processing is the communication destination device 202. When the internal communicator 123 receives a packet from the communication source device 101 with the local IP address of the conversion function unit 120 as the destination address, that is, a packet containing a control message of the first communication protocol including control data for the communication destination device 202 , the conversion function unit 120 performs message conversion processing. The conversion function unit 120 stores the transmission source IP address of the packet received from the communication source device 101 in its internal memory.

The IP address specifying unit 121 of the conversion function unit 120 has correspondence data (conversion table) that maps the local IP address of the conversion function unit 120 itself to the local IP address of the communication destination device 202.

FIG. 2B shows an example of a conversion table in the IP address specifying unit 121.

The IP address specifying unit 121 specifies the local IP address of the corresponding communication destination device 202 from the conversion table when the destination IP address of a packet received from the communication source device 101 matches the local IP address of the conversion function unit 120.

The communication protocol processor 122 generates a payload including address information indicating the local IP address (192.168.0.11) of the communication destination device 202 identified by the IP address specifying unit 121 and including the control message of the first communication protocol that was included in the received packet. The communication processor 122 adds a header of the second communication protocol to the head side of the generated payload, thereby generating a transfer request message of the second communication protocol. Then, the communication protocol processor 112 further adds an IP header and other information to the transfer request message of the second communication protocol to obtain a packet.

The transmission source IP address of the IP header is the global IP address of the conversion function unit 120 (10.0.0.10), and the destination IP address is the global IP address of the conversion function unit 220 (133.113.107.110) in the gateway device 200.

The external communicator 124 of the conversion function unit 120 outputs the generated packet to the wide area network N3. As a result, the external communicator 124 transmits the transfer request message of the second communication protocol to the gateway device 200 via the wide area network N3.

### [Gateway device 200.]

The gateway device 200 is connected to the communication processing device 100 in wide area network N3. The gateway device 200 is connected to the communication destination devices 201 and 202 in the local network N2. The gateway device 200 receives a transfer request message of the second communication protocol, transmitted from the communication processing device 100, more precisely, a packet containing a transfer request message of the second communication protocol. The gateway device 200 determines the communication destination device to which the control message of the first communication protocol is to be transferred based on the address information contained in the payload of the transfer request message of the second communication protocol. The gateway device 200 forwards (transmits) the control message of the first communication protocol to the determined communication destination device. The gateway device 200 is described in more detail below.

The gateway device 200 has a conversion function unit 210. The conversion function unit 210 has a communication protocol processor 212, an internal communicator 213, and an external communicator 214. The internal communicator 213 communicates on the local network N2 side, and the external communicator 214 communicates on the wide area network N3 side. The conversion function unit 210 or the external communicator 214 is assigned a global IP address (133.113.107.110) on the wide area network N3 side. The conversion function unit 210 or the internal communicator 213 is assigned a local IP address (192.168.0.100) on the local network N2 side. The conversion function unit 210 is equipped with a function of processing the second communication protocol. The conversion function unit 210 may be equipped with HTTPS client functionality as the second communication protocol.

The communication protocol processor 212 has the function of processing the second communication protocol. It receives a transfer request message of the second communication protocol, which is destined to the global IP address of the gateway device 200, more specifically, a packet that contains a transfer request message of the second communication protocol. When the communication protocol processor 212 receives the packet, it processes the header of the transfer request message of the second communication protocol contained in the packet to obtain the payload. It then reads the address information and the control message of the first communication protocol from the obtained payload.

The communication protocol processor 212 generates an IP header with the IP address indicated by the address information (the IP address of the communication destination device 201 or the IP address of the communication destination device 201) as the destination and adds the generated IP header to the control message of the first communication protocol, thereby generating a packet. The source address of the IP header is the local IP address (192.168.0.100) of the gateway device 200. The internal communicator 213 of the conversion function unit 210 outputs the generated packet to the local network N2. Thereby, a control message of the first communication protocol is transmitted to the communication destination device (201 or 202) to which the IP address indicated by the address information is assigned. The output packet is received by the communication destination device (201 or 202).

The gateway device 200 is configured as a computer device equipped with a processor or CPU or other circuitry, a memory or hard disk or other storage device, and communication circuitry. The device may be configured by a single computer device or as a system including multiple computer devices connected to each other. The functions of the gateway device 200 may be realized by having a program executed by a CPU.

### [communication destination devices 201, 202]

The communication destination devices 201 and 202 are communication devices such as industrial controllers that are connected to the local network N2 and are subject to control by the communication source device 101. The communication destination devices 201 and 202 are assigned IP addresses based on an address architecture (second address architecture) in the local network N2. The communication destination device 201 is assigned a local IP address of 192.168.0.10. The communication destination device 202 is assigned a local IP address of 192.168.0.11. The local network N2 is a wired local network or a wireless local network. The wired or wireless local network may be Ethernet (registered trademark) or WiFi (registered trademark).

The communication destination device 201 receives from the gateway device 200 a control message of the first communication protocol, more precisely, a packet addressed to its own device containing a control message of the first communication protocol. The communication destination device 201 acquires the control message of the first communication protocol contained in the received packet and operates according to the control data contained in the acquired control message. Similarly, the communication destination device 202 receives a control message of the first communication protocol, more precisely, a packet addressed to its own device containing a control message of the first communication protocol. The communication destination device 202 acquires the control message of the first communication protocol contained in the received packet and operates according to the control data contained in the acquired control message.

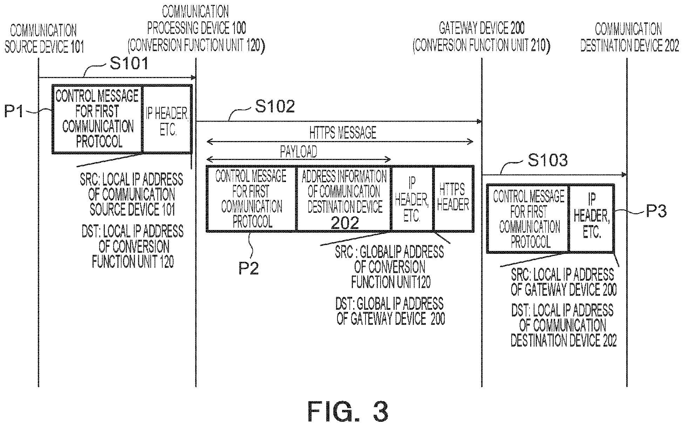

FIG. 3 shows a sequence between each device when transmitting a control message of the first communication protocol from the communication source device 101 to the communication destination device 202, along with the structure of the packets transmitted in the sequence. The structure of the packet is only outlined to the extent necessary for the explanation of this embodiment, and may actually include other communication protocol headers, etc. (e.g., TCP or UDP headers, MAC headers, PHY headers, etc.) not shown in the figure.

The communication source device 101 generates a first communication protocol message (control message) containing control data for the communication destination device 202 and generates a packet P1 with an IP header etc. added to the control message. The destination IP address ("DST" in FIG. 3) of the packet P1 is the local IP address of the conversion function unit 120 that performs the processing corresponding to the communication destination device 202 to be controlled. The transmission source IP address ("SRC" in FIG. 3) of the packet P1 is the local IP address of the communication source device 101. The communication source device 101 outputs the generated packet P1 to the cloud network N1 (S101).

The conversion function unit 120 of the communication processing device 100 receives the packet P1 from the communication source device 101. Since the destination IP address of the packet P1 matches the IP address of the conversion function unit 120, the IP address specifying unit 121 of the conversion function unit 120 acquires the local IP address of the communication destination device 202 corresponding to the destination IP address of the received packet P1 based on the conversion table (see FIG. 2B). The communication protocol processor 122 generates a payload including address information indicating the obtained local IP address of the communication destination device 202 and including a control message of the first communication protocol included in the received packet. The communication protocol processor 122 adds an IP header etc. to the payload: the transmission source IP address (SRC in FIG. 3) of the IP header is the global IP address of the conversion function unit 120, and the destination IP address (DST in FIG. 3) is the global IP address of the conversion function unit 210 in the gateway device 200. The communication protocol processor 122 also generates a header of the second communication protocol (HTTPS header). By adding the header to the payload, the transfer request message (HTTPS message) and packet P2 of the second communication protocol are generated. The conversion function unit 120 outputs the generated packet P2 to the wide area network N3 (S102). The conversion function unit 120 stores the transmission source IP address of the packet P1 received from the communication source device 101 in its internal memory.

The gateway device 200 receives the packet P2 transmitted from the conversion function unit 120 of the communication processing device 100. The communication protocol processor 212 in the conversion function unit 210 of the gateway device 200 acquires the address information and the control message of the first communication protocol from the payload of the transfer request message of the second communication protocol included in the received packet P2. The communication protocol processor 212 generates an IP header, etc. with the IP address indicated by the address information (IP address of the communication destination device 202) as the destination, adds the generated IP header, etc. to the control message of the first communication protocol, and generates a packet P3. The source of the IP header is the local IP address of the gateway device 200. The conversion function unit 210 outputs the generated packet to the local network N2 (S103). The output packet is received by the communication destination device 202.

The communication destination device 202 receives the packet P3 whose destination IP address is its own IP address from the gateway device 200. The communication destination device 202 acquires the control message of the first communication protocol contained in the received packet P3 and operates according to the control data contained in the acquired control message.

The above description shows the case of communication source device 101 transmitting a control message of the first communication protocol to communication destination device 202. The following describes the operation in which the communication destination device 202, which received the control message, transmits a message (response message) of the first communication protocol containing response data as a result of control, to the communication source device 101.

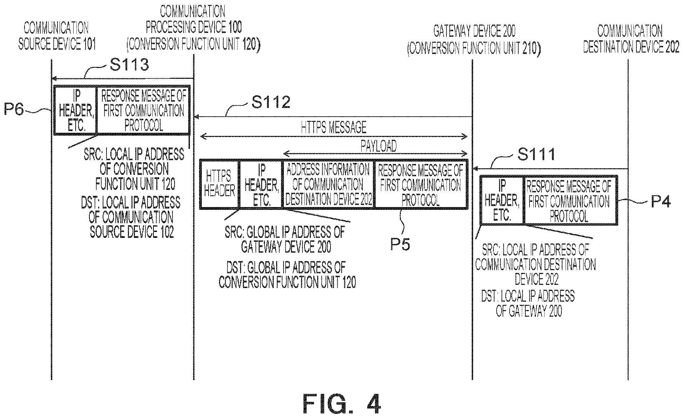

FIG. 4 shows the sequence between each device when the communication destination device 202 transmits a response message of a first communication protocol to the communication source device 101, along with the schematic structure of the packets transmitted in that sequence.

The communication destination device 202 generates a packet P4 by adding an IP header to the response message of the first communication protocol, the destination address of the packet P4 being the gateway device 200, and outputs the generated packet P4 to the local network N2 (S111). The transmission source IP address of the packet P4 is the local IP address of the communication destination device 202, and the destination address is the local IP address of the gateway device 200 (conversion function unit 210).

The communication protocol processor 212 in the conversion function unit 210 of the gateway device 200 acquires the transmission source IP address from the IP header of the received packet P4 and the response message of the first communication protocol from the packet P4. The communication protocol processor 212 generates a payload which includes address information indicating the acquired transmission source IP address (the local IP address of the communication destination device 202) and which includes the response message of the first communication protocol. The communication protocol processor 212 generates an IP header, etc., the transmission source IP address of the IP header being the global IP address of the gateway device 200 and the destination IP address of the IP header being the global IP address of the communication processing device 100. The conversion function unit 210 adds the generated IP header, etc. to the payload. The communication protocol processor 212 also adds a header of the second communication protocol to the payload, to thereby generate a transfer request message of the second communication protocol and the packet P5. The transfer request message is a message requesting that a response message is transferred (forwarded) to the communication source device from which the control message was transmitted. The conversion function unit 210 outputs the generated packet P5 to the wide area network N3 (S112). Thereby, the transfer request message of the second communication protocol is transmitted to the communication processing device 100 via the wide area network N3.

The communication protocol processor 122 of the conversion function unit 120 of the communication processing device 100 processes the header of the transfer request message of the second communication protocol contained in the received packet P5 and acquires the address information and the response message of the first communication protocol from the payload. Since the address information indicates the IP address of the communication destination device 202 corresponding to the conversion function unit 120, the IP address of the communication source device 101 stored in the internal memory is read out. The conversion function unit 120 generates an IP header, etc., the read IP address being the destination IP address of the IP header and its own local IP address being the transmission source IP address of the IP header. The conversion function unit 120 adds the IP header, etc. to the response message of the first communication protocol, generates a packet P6, and outputs the packet P6 to the cloud network N1 (S113). The output packet P6 is received by the communication source device 101. The packet P5 from the gateway device 200 is also received by the conversion function unit 110, but the conversion function unit 110 discards the packet P5 because the above address information does not indicate the IP address of the communication destination device 201 corresponding to the conversion function unit 110.

The communication source device 101 which has received the packet P6 reads the response message of the first communication protocol contained in the packet P6. From the transmission source IP address of packet P6, the communication source device 101 can determine whether the response message is from which of communication destination devices 201 or 202. If the transmission source IP address is the IP address of the conversion function unit 120, the response message can be judged to be from the communication destination device 202. If the transmission source IP address is the IP address of the conversion function unit 110, the response message can be judged to be from the communication destination device 201. The communication source device 101 operates based on the response data contained in the response message. For example, if the response data indicates that the control was executed correctly, the communication source device 101 performs a process to transmit control data to be next executed. Otherwise, if the response data indicates that an error was detected in the control, the communication source device 101 may perform a process such as reporting the error to the user.

The explanation in FIG. 4 shows an example in which the communication source device 101 transmits a control message of the first communication protocol to the communication destination device 202, and the communication destination device 202 transmits a response message of the first communication protocol to the communication source device 101. The same operation as above is performed when a control message of the first communication protocol is transmitted from the communication source device 101 to the communication destination device 201, and a response message of the first communication protocol is transmitted from the communication destination device 201 to the communication source device 101. However, in this case, the conversion function unit 110 is used instead of the conversion function unit 120.

In this embodiment, there were two communication destination devices in the local network N2, but there can be one, three, or more communication destination devices. Since a conversion function unit is provided for each communication destination device, the number of conversion function units can be changed according to the number of communication destination devices.

According to the above, if the communication source device 101 transmits a control message of the first communication protocol to the conversion function unit (110 or 120), the control message of the first communication protocol is transferred (forwarded) to the communication destination device (201 or 202) corresponding to the conversion function unit (110 or 120). If the communication destination device (201 or 202) transmits a response message of the first communication protocol to the conversion function unit 210 of the gateway device 200, the response message is transferred (forwarded) to the communication source device 101. Thus, communication using the first communication protocol is possible between the communication source device and the communication destination device without adding any new functions to the existing communication source device and the existing communication destination device.

According to this embodiment, the IP address information to be added to the control message of the first communication protocol for transmission to the local network N2 can be a local IP address in the local network N2, so there is no need to specify a local IP address in the cloud network N1 in the gateway device 200 side. Therefore, the gateway device 200 does not need to specify the local IP address in the cloud network N1. Therefore, the gateway device 200 does not need to hold the conversion table. Therefore, the configuration of the gateway device 200 can be simplified.

### (Second Embodiment)

In the first embodiment described above, there is one communication source device, but the second embodiment deals with the case where there are two communication source devices, and each communication source device uses a different type of first communication protocol. As in the first embodiment, there are two communication destination devices, and both two communication destination devices can support two types of the first communication protocol. Specifically, each communication destination device is running two applications corresponding to the two types of first communication protocols, and each application can process a control message for the corresponding type of first communication protocol. Each communication destination device may be capable of processing a control message of any one type of the first protocols of the two communication source devices by the corresponding application. The following is a detailed description of this embodiment. The same explanations as in the first embodiment are omitted where appropriate.

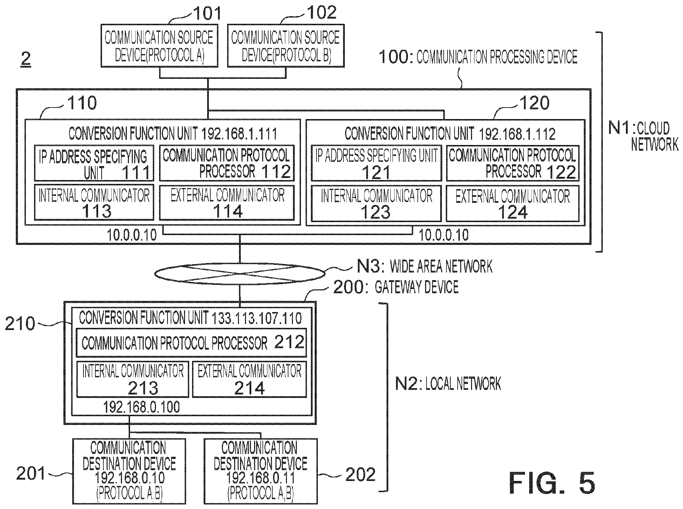

FIG. 5 is a block diagram of the communication system 2 for the second embodiment. Elements identical or corresponding to those in FIG. 1 are marked with the same reference signs, and detailed descriptions are omitted where appropriate.

A communication source device 101 and a communication source device 102 are connected to the cloud network N1. The IP addresses of communication source device 101 and communication source device 102 may be the same or different.

The first communication protocol of the communication source device 101 is "protocol A" and the first communication protocol of the communication source device 102 is "protocol B". Both communication destination devices 201 and 202 support both protocol A and protocol B. Both communication destination devices 201 and 202 perform an application corresponding to protocol A (called application A) and an application corresponding to protocol B (called application B). UDP is used as the transport layer protocol between communication processing device 100 and the communication source devices 101 and 102. Similarly, UDP is used as the transport layer protocol between the gateway device 200 and the communication destination devices 201 and 202. TCP is used as the transport layer protocol between the communication processing device 100 and the gateway device 200. However, TCP and UDP are only examples.

As in the first embodiment, conversion function units are provided for each communication destination device. The conversion function unit 110 corresponds to the communication destination device 201, and the conversion function unit 120 corresponds to the communication destination device 202. The communication source device 101 uses the conversion function unit 110 when transmitting a control message to the communication destination device 201 and uses the conversion function unit 120 when transmitting a control message to the communication destination device 202. The communication source device 102 uses the conversion function unit 110 when transmitting a control message to the communication destination device 201 and uses the conversion function unit 120 when transmitting a control message to the communication destination device 202.

The communication source device 101 generates a control message of protocol A containing control data for the communication destination device 201 or 202 and generates a packet with a UDP header and an IP header, etc. added to the control message. The communication source device 101 sets the destination IP address of the packet to the IP address of the conversion function unit (110 or 120) that performs the processing corresponding to the communication destination device to be controlled among the communication destination devices 201 and 202. The communication source device 101 sets a destination port number of UDP in the packet to a port number for listening for protocol A (1000 in this example). The communication source device 101 sets a source port number of the UDP to a predefined port number (2000 in this example). The communication source device 101 outputs the generated packet to the cloud network N1.

The communication source device 102 generates a protocol B control message containing control data for the communication destination device 201 or 202 and generates a packet with a UDP header and IP header, etc. added to the control message. The communication source device 102 sets the destination IP address of the packet to the IP address of the conversion function unit (110 or 120) that performs the processing corresponding to the communication destination device to be controlled among the communication destination devices 201 and 202. The communication source device 102 sets the destination port number of the UDP in the packet to the port number for listening for protocol B (1001 in this example). The communication source device 102 sets the UDP source port number to a predetermined port number (2001 in this example). The source port numbers used by communication source device 102 and communication source device 101 are assumed to be different from each other. The communication source device 102 outputs the generated packet to the cloud network N1.

Both conversion function units 110 and 120 are capable of message conversion processing (conversion processing) for both protocol A and protocol B. The conversion function units 110 and 120 each listen for packets from the communicator device 101 or 102 at both the port number for protocol A (1000 in this example) and the port number for protocol B (1001 in this example).

If a packet with the destination address of its own IP address and the destination port number 1000 is received by the internal communicator 113 of the conversion function unit 110, the communication protocol processor 112 performs conversion processing for protocol A and generates a transfer request message of the second communication protocol. Specifically, the communication protocol processor 112 generates a payload that includes a control message for protocol A, address information indicating the local IP address of the communication destination device 201, and port number information indicating port number 1000. Then, by adding the header of the second communication protocol to the payload, the transfer request message of the second communication protocol is generated. The method of specifying the local IP address of the communication destination device 201 is the same as the method performed by the IP address specifying unit 111 using the conversion table as in the first embodiment. The transfer request message is a message requesting that the control message of protocol A be transferred to application A of communication destination device 201. The conversion function unit 110 stores the pair of the transmission source IP address and the source port number of the packet received from the communication source device 101 or 102 in the internal memory for protocol A in the conversion function unit 110.

If a packet with the destination address of its own IP address and the destination port number 1001 is received by the internal communicator 113 of the conversion function unit 110, the communication protocol processor 112 performs conversion processing for protocol B and generates a transfer request message of the second communication protocol. Specifically, the communication protocol processor 112 generates a payload that includes a control message for protocol B, address information indicating the local IP address of the communication destination device 201, and port number information indicating port number 1001. Then, by adding the header of the second communication protocol to the payload, the transfer request message of the second communication protocol is generated. The method of specifying the local IP address of the communication destination device 201 is the same as the method performed by the IP address specifying unit 111 using the conversion table as in the first embodiment. The transfer request message is a message requesting that the control message of protocol B be transferred to application B of the communication destination device 201. The conversion function unit 110 stores the pair of the transmission source IP address and the source port number of the packet received from the communication source device 101 or 102 in the internal memory for protocol B in the conversion function unit 110.

The communication protocol processor 112 of the conversion function unit 110 adds an HTTPS header and an IP header, etc. to the generated transfer request message to generate a packet addressed to the gateway device 200. The external communicator 114 of the conversion function unit 110 outputs the generated packet to the wide area network N3.

The processing of the conversion function unit 120 is similar to that of the conversion function unit 110, except that the communication destination device subject to the conversion processing is the communication destination device 202. That is, when a packet with the destination address of its own IP address and the destination port number 1000 is received by the internal communicator 123 of the conversion function unit 120, the communication processor 122 performs the conversion processing for protocol A and generates a transfer request message of the second communication protocol. Specifically, the communication protocol processor 122 generates a payload that includes a control message for protocol A, address information indicating the local IP address of the communication destination device 202, and port number information indicating the port number 1000. Then, by adding a header of the second communication protocol to the payload, the transfer request message of the second communication protocol is generated. The transfer request message is a message requesting that the control message of protocol B be transferred to application A of the communication destination device 202. The conversion function unit 120 stores the pair of the transmission source IP address and the source port number of the packet received from the communication source device 101 or 102 in the internal memory for protocol A in the conversion function unit 120.

When a packet with the destination address of its own IP address and the destination port number 1001 is received by the internal communicator 123 of the conversion function unit 120, the communication protocol processor 122 performs conversion processing for protocol B and generates a transfer request message of the second communication protocol. Specifically, the communication protocol processor 122 generates a payload that includes a control message for protocol B, address information indicating the local IP address of the communication destination device 202, and port number information indicating port number 1001. Then, by adding a header of the second communication protocol to the payload, the transfer request message of the second communication protocol is generated. The transfer request message is a message requesting that the control message of protocol B be transferred to application B of communication destination device 202. The conversion function unit 120 stores the pair of the transmission source IP address and the source port number of the packet received from the communication source device 101 or 102 in the internal memory for protocol B in the conversion function unit 120.

The communication protocol processor 122 of the conversion function unit 120 adds an HTTPS header and an IP header, etc. to the generated transfer request message to generate a packet addressed to the gateway device 200. The external communicator 124 outputs the generated packet to the wide area network N3.

The external communicator 214 of the conversion function unit 210 of the gateway device 200 receives the packet transmitted from the conversion function unit 110 or 120 of the communication processing device 100. The communication protocol processor 212 in the conversion function unit 210 reads the address information, the port number information, and the control message of the first communication protocol (protocol A or protocol B) from the payload of the transfer request message of the second communication protocol in the received packet. The communication protocol processor 212 generates a UDP header and an IP header, etc., and adds the UDP header and the IP header, etc. to the control message of the first communication protocol (protocol A or protocol B) to generate a packet. The destination IP address is the local IP address indicated by the address information above, and the transmission source IP address is the local IP address of the Gateway device 200. The destination port number of the UDP header is the port number indicated by the port number information. The source port number of the UDP header can be any number or a predetermined number. The internal communicator 213 of the conversion function unit 210 outputs the generated packet to the local network N2. The output packet is received by the communication destination device 201 or 202.

The communication destination device 201 or 202 receives a packet from the gateway device 200 whose destination IP address is the IP address of its own device. The communication destination device 201 or 202 acquires the control message of the first communication protocol (protocol A or protocol B) contained in the received packet and passes the control data contained in the acquired control message to the application indicated by the destination port number in the UDP header. If the destination port number is 1000, it is passed to application A. If the destination port number is 1001, it is passed to application B. Each application operates according to the passed control data.

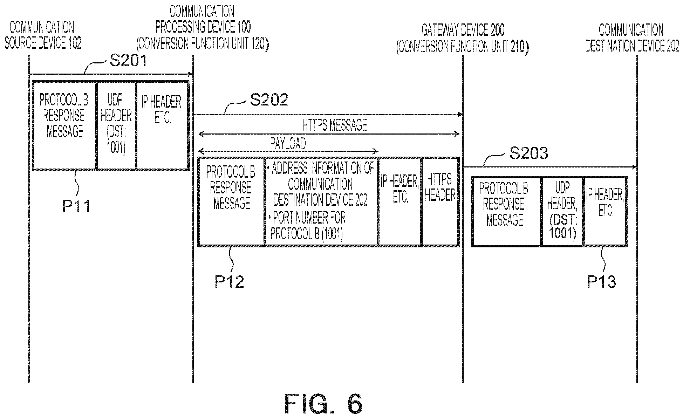

FIG. 6 shows the sequence between each device when a control message of protocol B is transmitted from the communication source device 102 to the communication destination device 202, along with the schematic structure of the packets transmitted in that sequence. The second communication protocol is assumed to be HTTPS. Assume that the IP address of the communication source device 102 is 192.168.1.123 and the source port number used by the communication source device 102 is 901.

The communication source device 102 generates a control message of protocol B containing control data for the communication destination device 202 and generates packet P11 with a UDP header and an IP header, etc. added to the control message. The destination IP address of packet P11 is the local IP address of the conversion function unit 120 that performs the processing corresponding to the communication destination device 202 to be controlled. The source IP address of packet P11 is the local IP address of the communication source device 102. The destination port number of the UDP header is the port number 1001 for listening of protocol B. The source port number of the UDP header is the "901 ". The communication source device 102 outputs the generated packet P11 to the cloud network N1 (S201).

The IP address specifying unit 121 of the conversion function unit 120 of the communication processing device 100 obtains the local IP address of the communication destination device 202 corresponding to the destination IP address of the received packet based on the conversion table. The communication protocol processor 122 of the conversion function unit 120 generates a payload including address information indicating the local IP address of the communication destination device 202, port number information indicating port number 1001, and a control message of protocol B, based on the received packet. The communication protocol processor 122 generates a TCP header and an IP header, etc. and adds them to the payload. The source IP address of the IP header is the global IP address of the conversion function unit 120, and the destination IP address is the global IP address of the conversion function unit 220 in the gateway device 200. The destination port number of the TCP header is the port number of the gateway device 200 for listening, and the source port number is any number or a predetermined number. The communication processor 122 also generates a header of the second communication protocol (HTTPS header). The communication protocol processor 122 generates a transfer request message (HTTPS message) of the second communication protocol and packet P12 by adding the header to the head side of the payload. The conversion function unit 120 outputs the generated packet P12 to the wide area network N3 (S202). The conversion function unit 120 stores a pair of the source IP address and the source port number (192.168.1.123:901) of the packet P11 received from the communicator device 102 in its internal memory.

The gateway device 200 receives the packet P12 transmitted from the conversion function unit 120 of the communication processing device 100. The communication protocol processor 212 in the conversion function unit 210 of the gateway device 200 reads the address information, the port number information, and the control message of protocol B from the payload of the transfer request message of the second communication protocol in the received packet P12. The conversion function unit 210 generates a UDP header with the destination port number as the port number 1001 indicated by the port number information and an IP header with the address indicated by the address information (the IP address of the communication destination device 202) as the destination address. The source address of the IP header is the local address of the gateway device 200. The source port number of the UDP header is port number 1001 for protocol B. The conversion function unit 210 generates packet P13 by adding the generated UDP header and IP header, etc. to the control message for protocol B. The conversion function unit 210 outputs the generated packet P13 to the local network N2 (S203). The output packet is received by the communication destination device 202.

The communication destination device 202 receives packet P13, whose destination IP address is its own IP address, from the gateway device 200. The communication destination device 202 passes the control data contained in the control message of protocol B to application B indicated by the port number 1001 of the UDP header in the received packet P13. Application B operates according to the passed control data.

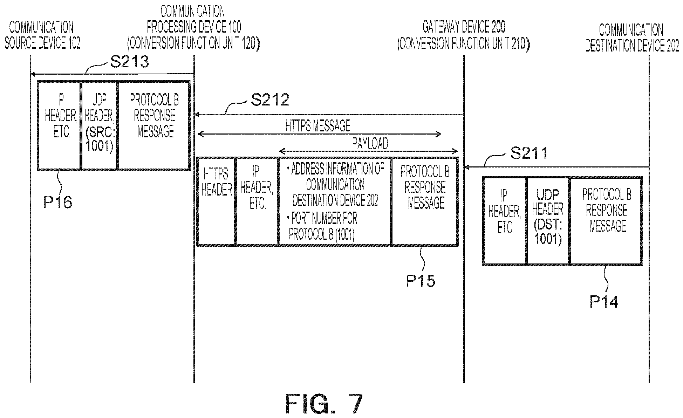

While the above description describes the case in which a control message of protocol B is transmitted from the communication source device 102 to the communication destination device 202, an example of the operation in which the communication destination device 202 having received the control message transmits a response message of protocol B to the communication source device 102 is described below using FIG. 7.

FIG. 7 shows the sequence between each device when a communication destination device 202 transmits a response message of protocol B to a communication source device 102, along with the schematic structure of the packets transmitted in that sequence.

The communication destination device 202 generates packet P14 by adding an IP header with the destination address of the gateway device 200 to the response message of protocol B containing response data to the communication source device 102. The communication destination device 202 outputs the generated packet P14 to the local network N2 (S211). The source IP address of packet P14 is the local IP address of the communication destination device 202, and the destination address is the local IP address of the gateway device 200. The source port number of the UDP header is port number 1001 for protocol B. The destination port number of the UDP header is port number 1001 for protocol The destination port number of the UDP header is port number 1001 for protocol B. The gateway device 200 is listening on local network N2 at port number 1001 for protocol B and at port number 1000 for protocol A.

The conversion function unit 210 of the gateway device 200 specifies the source IP address of the IP header (IP address of the communication destination device 202) in the packet P14 received from the communication destination device 202. The conversion function unit 210 specifies the destination port number of the UDP header (port number 1001 for application B) in the packet P14. The conversion function unit 210 also acquires a response message of protocol B from packet P14. The conversion function unit 210 generates a payload of the second communication protocol, which includes address information indicating the local IP address of the communication destination device 202, port number information indicating the port number 1001 for protocol B, and the response message of protocol B. The conversion function unit 210 adds an IP header etc. to the payload. The conversion function unit 210 also adds a header of the second communication protocol to the payload to generate a transfer request message of the second communication protocol and packet P15. The conversion function unit 210 outputs the generated packet P15 to the wide area network N3 (S212). The source IP address in the IP header of packet P15 is the global IP address of the gateway device 200 and the destination IP address is the global IP address of the communication processing device 100. The UDP destination port number of the packet is the listening port number of the communication processing device 100, and the source port number can be any number or a predetermined number. The predetermined number may be the same as the port number used to listen for the packet of the control message from the communication processing device 100.

The conversion function unit 120 in the communication processing device 100 acquires the address information, the port number information, and the response message of protocol B from the payload of the transfer request message of the second communication protocol contained in the packet P15 received from the gateway device 200. The address information indicates the IP address of the communication destination device 202 corresponding to the conversion function unit 120, and the port number information indicates the port number for protocol B (application B). Therefore, the pair of the IP address of the communication source device 102 and the port number (192.168.1.123:901), which is stored in the internal memory for Protocol B, is read. The conversion function unit 120 generates an IP header with the destination IP address of the read IP address and the source IP address of its own local IP address. It also generates a UDP header with the destination port number being the read port number and the source port number being the port number for protocol B (1001). The conversion function unit 120 generates packet P16 by adding the UDP header and the IP header, etc. to the response message of protocol B. The conversion function unit 120 transmits the packet P16 to the communication source device 102 in the cloud network N1 (S213). The conversion function unit 110 also receives the packet P15, but the conversion function unit 110 discards the received packet P15 because the above address information acquired from the received packet P15 does not indicate the IP address of the communication destination device 201 corresponding to the conversion function unit 110.

The communication source device 102 reads the response message of protocol B from the received packet P16 and performs processing based on the response data contained in the response message. From the source IP address of packet P16, the communication source device 102 can determine whether the response message is from which of the communication destination devices 201 or 202. It can also determine the source application (type of the first communication protocol) from the source port number. Examples of processing performed based on the response data are the same as in the first embodiment.

The explanation in FIG. 7 shows an example of the communication destination device 202 transmitting the response message of protocol B to the communication source device 102, but the same operation can be performed when the communication destination device 202 receives a control message of protocol A and transmits a response message. The same operation is also possible when the communication destination device 202 receives a control message for protocol A or B from the communication source device 101 and transmits a response message to the communication source device 101. The same operation as above is also possible when the communication destination device 201 receives a control message for protocol A or B from the communication source device 101 or 102 and transmits a response message to the communication source device 101 or 102.

According to the above, the communication processing device 100 incorporates information on the port number into the transfer request message of the second communication protocol wherein the port number corresponds to the application to which the control message should be transferred among the plurality of applications operating in the communication destination device to be a transfer destination. This allows the gateway device 200 to transfer a control message of the first communication protocol to the corresponding application, even when the plurality of applications are operating at the communication destination device.

### (Modification 1)

The IP address and the listening port number, etc. of the communication processing device 100 and the IP address and the listening port number, etc. of the gateway device 200 in the second embodiment described above may be set by a file created based on user input.

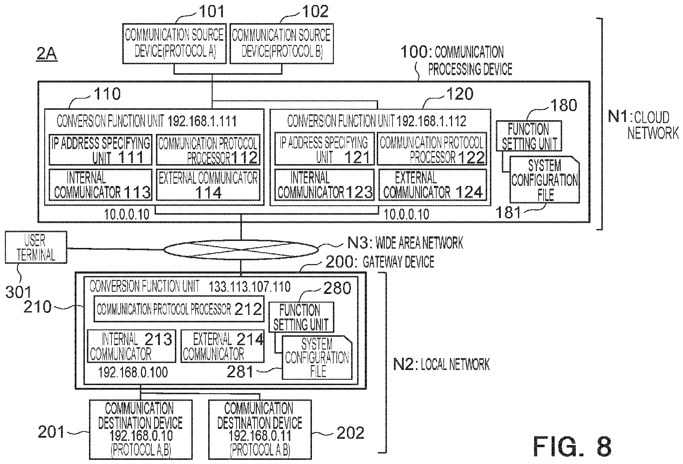

FIG. 8 is a block diagram of a communication system 2A for Modification 1 of the second embodiment. Elements identical or corresponding to those in FIG. 5 are marked with the same reference signs, and detailed explanations are omitted.

A function setting unit 180 is provided in the communication processing device 100 to configure the conversion function units 110 and 120. The function setting unit 180 configures the conversion function units 110 and 120 (IP addresses, port numbers, etc.) based on the system configuration file 181. The system configuration file 181 can be created and updated based on input data from the user terminal 301. The function setting unit 180 causes the input GUI (Graphical User Interface) screen for creating and updating the system configuration file 181 to be presented to the user terminal 301. The function setting unit 180 receives the data input from the user terminal 301 and creates the system configuration file 181. The user can provide the input information to the function setting unit 180 by entering the necessary information on the input GUI screen and performing the upload operation.

A function setting unit 280 is provided in the gateway device 200 to configure the conversion function unit 210. The function setting unit 280 configures the settings of the conversion function unit 210 (IP address, port number, etc.) based on the system configuration file 281. The system configuration file 281 can be created and updated based on input data from the user terminal 301. The function setting unit 280 causes the user terminal 301 to present an input GUI screen for creating and updating the system configuration file 281. The function setting unit 280 receives the input data from the user terminal 301 and creates the system configuration file 281. The user can provide entered information to the function setting unit 280 by entering the necessary information on the input GUI screen and performing the upload operation. The user terminal 301 for setting function setting unit 180 and the user terminal 301 for setting function setting unit 280 may be the same, or they may be different user terminals connected to the wide area network N3.

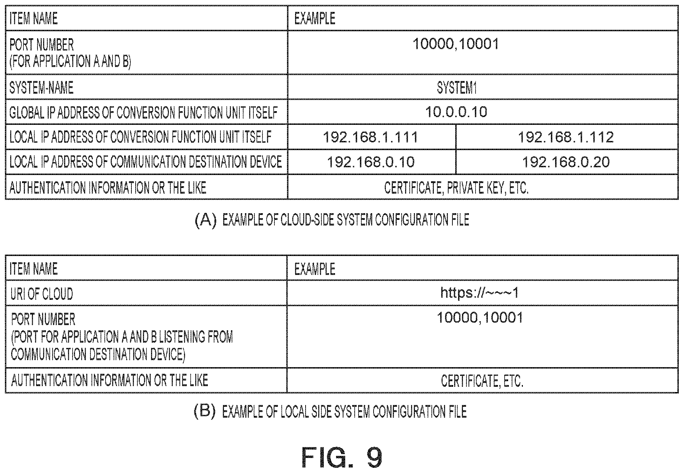

FIG. 9 shows an example of system configuration file 181 and system configuration file 281. The function setting unit 180 generates the system configuration file 181 in FIG. 9(A) based on user input. The function setting unit 280 also generates the system configuration file 281 in FIG. 9(B) based on user input. The "URI OF CLOUD " is the URI of the communication processing device 100 when the communication processing device 100 is an HTTPS server.

In FIG. 8, an example in which function setting units are added to the communication processing device 100 and the gateway device 200 in the second embodiment is shown, but similar variations are possible in the first embodiment.

### (Modification 2)

In the second embodiment described above, both conversion function units 110 and 120 are capable of supporting a plurality of types of first communication protocols (protocol A and protocol B), but each may be capable of supporting only one first communication protocol. For example, the conversion function unit 110 may support protocol A and the conversion function unit 120 may support protocol B. In this case, the communication destination device 201 may support only protocol A, and the communication destination device 202 may support only protocol B.

Or conversely, for example, the conversion function unit 110 may support protocol B and the conversion function unit 120 may support protocol A. In this case, communication destination device 201 may support only protocol B, and communication destination device 202 may support only protocol A.

### (Modification 3)

In the second embodiment described above, there were two communication source devices in the cloud network N1, but the number of communication source devices may be three or more.

Although there were two communication destination devices in the local network N2, there can be one, three, or more communication destination devices.

The number of communication source devices and the number of the communication destination devices need not be the same. There may be one communication source device and two or more communication destination devices. It is also possible to have two or more communication source devices and one communication destination device.

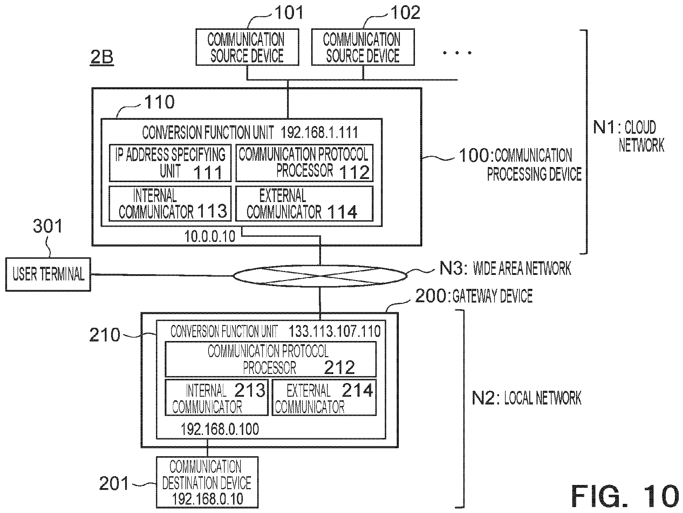

FIG. 10 is a block diagram of the communication system 2B for Modification 3 of the second embodiment. Elements identical or corresponding to those in FIG. 5 are marked with the same reference signs, and detailed explanations are omitted. In this example, there are two or more communication source devices and one communication destination device. Since there is only one communication destination device, there is only one conversion function unit in the communication processing device. Except for the difference in the number of communication destination devices and the difference in the number of conversion function units, the operation of communication system 2B is the same as that of communication system 2 in FIG. 5.

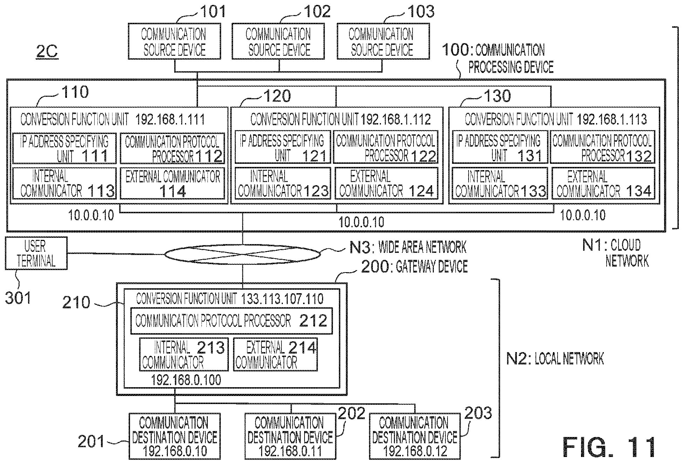

FIG. 11 is a block diagram of the communication system 2C for Modification 3 of the second embodiment. In this example, there are three communication source devices (communication source devices 101, 102, 103) and three communication destination devices (communication destination devices 201, 202, 203). Since there are three communication destination devices, there are also three conversion function units (110, 120, 130) in the communication processing device. The conversion function units 110, 120, and 130 perform processing corresponding to the communication destination devices 201, 202, and 203, respectively. Except for the difference in the number of communication destination devices and the difference in the number of conversion function units, the operation of communication system 2C is the same as that of communication system 2 in FIG. 5.

Similar modifications to FIG.s 10 and 11 are possible for the first embodiment.

### (Modification 4)

In the second embodiment described above, the conversion function units 110 and 120 are used commonly for all communication source devices respectively, but a dedicated conversion function unit may be provided for each communication source device.

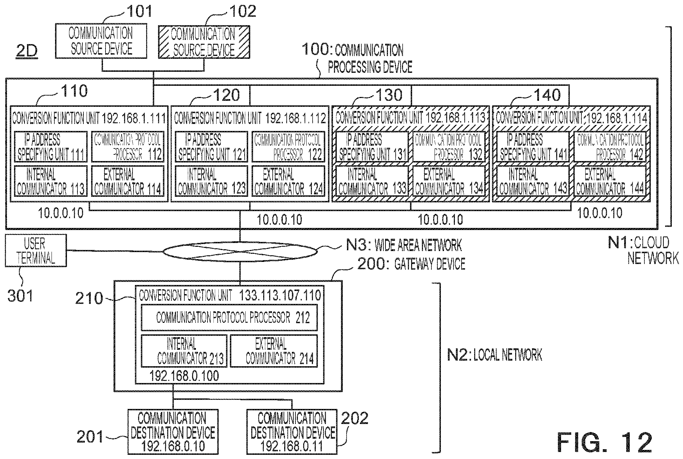

FIG. 12 is a block diagram of the communication system 2D for Modification 4 of the second embodiment.

The conversion function units 110 and 120 are dedicated to the communication source device 101, which handles protocol A, and the conversion function units 130 and 140 are dedicated to the communication source device 102, which handles protocol B. The conversion function unit 110 is used to transmit a control message from the communication source device 101 to the communication destination device 201, and the conversion function unit 120 is used to transmit a control message from the communication source device 101 to the communication destination device 202. When transmitting a control message from the communication source device 102 to the communication destination device 201, the conversion function unit 130 is used, and when transmitting a control message from communication source device 102 to communication destination device 202, conversion function unit 140 is used. The conversion function unit 130 has the same function as the conversion function unit 110, and the conversion function unit 140 has the same function as the conversion function unit 120. Examples of the operation of the communication system 2D are the same as in the second embodiment, so the description is omitted.

Similar modifications to FIG. 12 are possible for the first embodiment.

### (Modification 5)

In the second embodiment described above, there is one local network, but there may be two or more. In this case, a gateway device and a communication processing device are located in each local network.

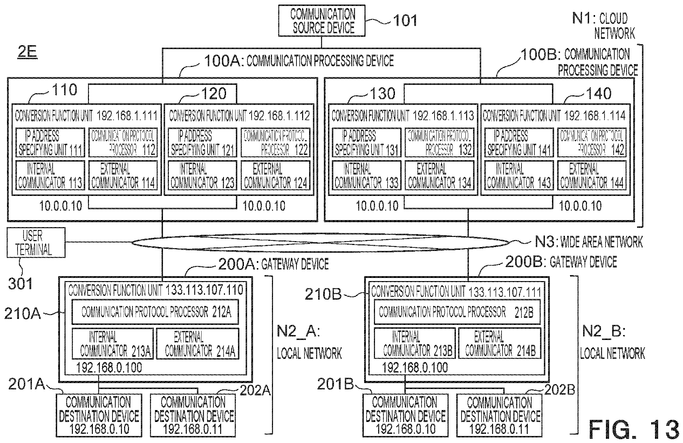

FIG. 13 is a block diagram of communication system 2E for Modification 5 of the second embodiment.

Two local networks N2_A and N2_B exist. The communication destination devices 201A and 202A are located in the local network N2_A, and the communication destination devices 201B and 202B are located in the local network N2_B. The address architectures of the local networks N2_A and N2_B are independent of each other. As shown in the figure, the IP addresses of the communication destination devices 201A and 202A are the same as those of the communication destination devices 201B and 202B, respectively, but may be different.

The gateway device 200A and the communication processing device 100A are located corresponding to the local network N2_A, and the gateway device 200B and the communication processing device 100B are located corresponding to the local network N2_B.

When transmitting a control message of the first communication protocol from the communication source device 101 to the local network N2_A, the communication processing device 100A and the gateway device 200A are used. When transmitting a control message of the first communication protocol from the communication source device 101 to the local network N2_B, the communication processing device 100B and the gateway device 200B are used. The conversion function units 110 and 120 of the communication processing device 100A correspond to the communication destination devices 201A and 202A in the local network N2_A, respectively. The conversion function units 130 and 140 of the communication processing device 100B correspond to the communication destination devices 201B and 202B in the local network N2_B, respectively.

An example of the operation of communication system 2E in FIG. 13 is the same as in the first or second embodiment, so the explanation is omitted.

In FIG. 13, an example in which the second embodiment is modified so as to have a plurality of local networks is shown, but the first embodiment may be modified to have a plurality of local networks in the same way.

### (Modification 6)

In the first and second embodiments described above, each conversion function unit is fixedly connected to one gateway device, but in this modification, there are a plurality of gateway devices, and the gateway device to which each conversion function unit is connected can be switched by setting. This reduces the number of conversion function units operating in the communication processing device and saves memory capacity or power consumption.

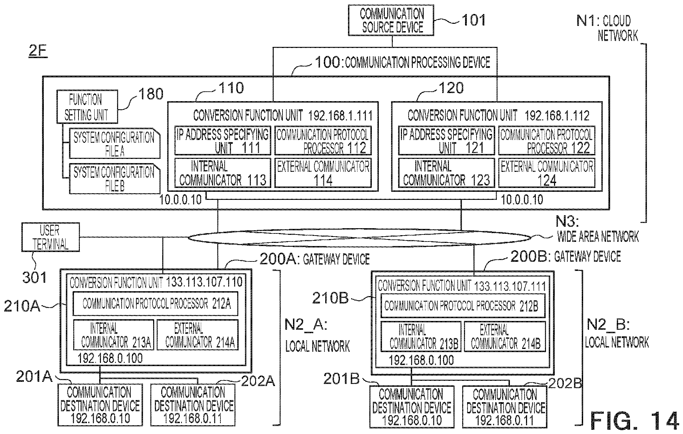

FIG. 14 is a block diagram of the communication system 2F according to Modification 6 of the second embodiment. The conversion function units 110 and 120 in the communication processing device 100 can switch settings by the function setting unit 180. When the function setting unit 180 allows the conversion function units 110 and 120 to communicate with the gateway device 200A, the conversion function units 110 and 120 are configured by the system configuration file A. On the other hand, when the function setting unit 180 allows the conversion function units 110 and 120 to communicate with the gateway device 200B, the conversion function units 110 and 120 are configured by the system configuration file B. The global IP addresses of the gateway devices 200A and 200B are different from each other. The settings in the system configuration files A and B include the settings for the global IP addresses of the gateway devices 200A and 200B. The function setting unit 180 configures the conversion function units 110 and 120 according to the instruction data from the user terminal 301. Alternatively, the function setting unit 180 may configure the conversion function units 110 and 120 in response to a request from the communication source device 101.

When the conversion function units 110 and 120 are configured according to the system configuration file A, the conversion function unit 110 performs processing corresponding to the communication destination device 201A of the local network N2_A. The conversion function unit 120 performs processing corresponding to the communication destination device 202A of the local network N2_A.

When the conversion function units 110 and 120 are configured by the system configuration file B, the conversion function unit 110 performs processing corresponding to the communication destination device 201B of the local network N2_B. The conversion function unit 120 performs processing corresponding to the communication destination device 202B of the local network N2_B.

The operation after the system configuration file A or B is set is the same as in the first or second embodiment, so the explanation is omitted.

In FIG. 14, the modification of the second embodiment is shown, but similar modifications are possible in the first embodiment.

### (Modification 7)

Each conversion function unit in the communication processing device 100 of the first and second embodiments described above may be equipped with functions other than the IP address specifying unit and the communication protocol processor. This allows the functions of each conversion function unit to be extended.

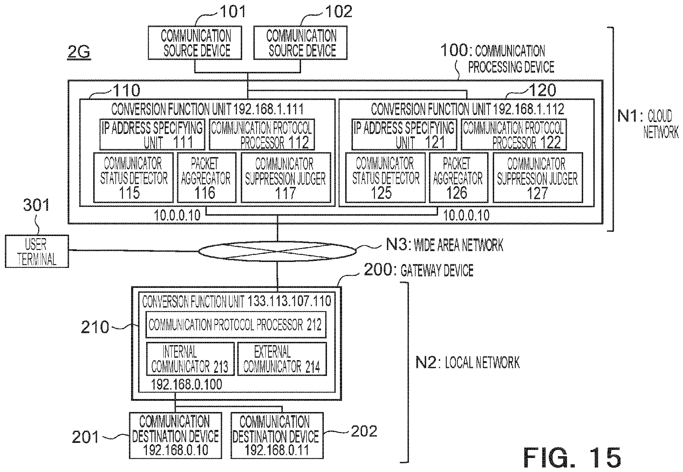

FIG. 15 is a block diagram of the communication system 2G for Modification 7 of the second embodiment. The conversion function unit 110 is further equipped with a communication status detector 115, a packet aggregator 116, and a communication suppression judger 117. The conversion function unit 120 is further equipped with a communication status detector 125, a packet aggregator 126, and a communication suppression judger 127.

The communication status detector 115 detects the communication status between the communication processing device 100 (the conversion function units 110 and 120) and the gateway device 200, or between the communication source device 101 and the communication destination device 201 and transmits information indicating the communication status to the user terminal 301. The user terminal 301 may display the communication status and allow the user to check the communication status. For example, if an error has occurred and communication has stopped, the user may move to the local network N2 to check the status of the communication destination device 201. The function of the communication status detector 125 is the same as that of the communication status detector 115.

The packet aggregator 116 combines multiple packets to be output to the wide area network N3 into a single data frame. By combining multiple packets into one packet, the overhead is reduced compared to transmitting packets separately when the packet size is small, which is expected to have the effect of reducing the communication volume. The packet aggregator 116 aggregates packets into a single data frame until, for example, the data size or the maximum number of packets that can be aggregated into a data frame is reached. If a time limit is set for the aggregation and the upper limit is not reached within a certain time, the aggregation may be terminated once at that point. The function of the packet aggregator 126 is the same as that of the packet aggregator 116.

The communication suppression judger 117 monitors the number of errors in communication, and when the number of errors exceeds a threshold value, it terminates or suppresses communication and transmits information to that effect to the communication source device 101 or the communication source device 102 or the user terminal 301. For example, the communication suppression judger 117 may monitor whether the number of errors in communication exceeds the threshold value, such as the number of HTTPS timeouts or retransmissions in communication between the communication processing device 100 (the conversion function units 110 and 120) and the gateway device 200. The communication suppression judger 127 has the same function as the communication suppression judger 117. The operation of the communication suppression judger 127 is self-explanatory from the description of the communication suppression judger 117, so a detailed description is omitted.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### [Reference Signs List]

1, 2, 2A, 2B, 2C, 2D, 2E, 2F, 2G Communication system
100, 100A, 100B Communication processing device
101, 102, 103 Communication source device
110 Conversion function unit
111 IP address specifying unit
112 Communication protocol processor
113 Internal communicator
114 External communicator
115 Communicator status detector
116 Packet aggregator
117 Communicator suppression judger
120, 130, 140 Conversion function unit
121 IP address specifying unit
122 Communication protocol processor
123 Internal communicator
124 External communicator
125 Communicator status detector
126 Packet aggregator
127 Communicator suppression judger
180 Function setting unit
181 System configuration file
200, 200A, 200B Gateway device
201, 201A, 201B Communication destination device
202, 202A, 202B Communication destination device
203 Communication destination device
210, 220 Conversion function unit
212 Communication protocol processor
213 Internal communicator
214 External communicator
280 Function setting unit
281 System configuration file
301 User terminal
N1 Cloud Network
N2 Local network
N2_A Local network
N2_B Local network
N3 Wide area network
P1, P2, P3, P4, P5, P6 Packets
P11, P12, P13, P14, P15, P16 Packets

## Claims

1. A communication processing device comprising:
a first communicator configured to receive a message of a first communication protocol from a first communication device in a first network of a first address architecture;
an address specifying unit configured to, in response to a destination address of the received message of the first communication protocol matching a first address of the first address architecture assigned to the first communicator, employ correspondence data mapping between the first address and an address of a second communication device in a second network of a second address architecture and specify the address of the second communication device corresponding to the first address;
a communication protocol processor configured to generate a message of a second communication protocol having a payload, the payload including address information indicative of the address of the second communication device and including the message of the first communication protocol, the message of the second communication protocol requesting that the message of the first communication protocol be transferred to the second communication device; and
a second communicator configured to transmit the message of the second communication protocol to a gateway device, the gateway device being able to which can communicate with the second communication device in the second network.

2. A communication processing device according to claim 1, wherein
the communication protocol processor specifies a port number corresponding to a destination port number of the message of the first communication protocol among a plurality of port numbers corresponding to a plurality of applications operating on the second communication device,
the communication protocol processor adds port number information indicating the specified port number to the payload, and
the message of the second communication protocol is a message requesting that the message of the first communication protocol be transferred to the application indicated by the port number information operating in the second communication device.

3. The communication processing device according to claim 1 or 2, wherein
the communication protocol processor generates the message of the second communication protocol by adding a header of the second communication protocol to the payload.

4. The communication processing device according to claim 1 or 2, wherein
the message of the first communication protocol includes control data to control the second communication device.

5. The communication processing device according to claim 1 or 2, wherein
the second communication protocol is a communication protocol having a higher layer than the first communication protocol in a communication protocol stack.

6. The communication processing device according to claim 5, wherein the second communication protocol is HTTPS.

7. The communication processing device according to claim 1 or 2, comprising a plurality of conversion function units, each of the conversion function units including the first communicator, the address specifying unit, the communication protocol processor, and the second communicator, wherein
the plurality of conversion function units are subject to processing corresponding to a plurality of the second communication devices in the second network,
different first addresses are assigned to the first communicators in the plurality of the conversion function units.

8. The communication processing device according to claim 2, wherein
a plurality of the second communication devices are arranged on a plurality of the second networks with different second address architectures.

9. A communication method, comprising:
receiving, by a communicator, a message of a first communication protocol from the first communication device in the first network of the first address architecture;
in response to a destination address of the received message of the first communication protocol matching a first address of the first address architecture assigned to the communicator, employing correspondence data mapping between the first address and an address of a second communication device in a second network of a second address architecture and specifying the address of the second communication device corresponding to the first address;
generating a message of a second communication protocol having a payload, the payload including address information indicative of the address of the second communication device and including the message of the first communication protocol, the message of the second communication protocol requesting that the message of the first communication protocol be transferred to the second communication device;
transmitting the message of the second communication protocol to a third network;
receiving the message of the second communication protocol from the third network;
processing the message of the second communication protocol to acquire the address information and the message of the first communication protocol; and
transmitting the message of the first communication protocol to the second communication device in the second network, a destination address of the message of the first communication protocol being the address of the second communication device indicated by the acquired address information.
